# EUROPEAN PATENT SPECIFICATION

(11) **EP 2 931 869 B1**
(45) Date of publication and mention of the grant of the patent: **23.01.2019**
(21) Application number: 13805334.3
(22) Date of filing: 10.12.2013
(51) Int. Cl.: C12G 1/022, A23L 2/84, C12C 5/00, C12C 11/00

(54) **PREPARATION OF A STABLE BEVERAGE**
HERSTELLUNG EINES STABILEN GETRÄNKS
PRÉPARATION D'UNE BOISSON STABLE

(30) Priority: 11.12.2012 EP 12196433
(43) Date of publication of application: 21.10.2015
(73) Proprietor: DSM IP Assets B.V., 6411 TE Heerlen (NL)
(72) Inventor: MUTSAERS, Johanna Henrica Gerdina Maria, NL-6100 AA Echt (NL); EDENS, Luppo, NL-6100 AA Echt (NL); HEIJNE, Wilbert Herman Marie, NL-6100 AA Echt (NL) (NL)
(74) Representative: DSM Intellectual Property
(86) International application number: PCT/EP2013/076087
(87) International publication number: WO 2014/090803

(56) References cited:
- EP-A1- 0 022 587
- EP-A1- 1 122 303
- EP-A1- 1 464 234
- WO-A1-03/104382
- WO-A2-95/21240
- LOPEZ MICHEL ET AL: "Effective prevention of chill-haze in beer using an acid proline-specific endoprotease from Aspergillus niger", JOURNAL OF AGRICULTURAL AND FOOD CHEMISTRY, AMERICAN CHEMICAL SOCIETY, US, vol. 53, no. 20, 1 October 2005 (2005-10-01), pages 7944-7949, XP002466863, ISSN: 0021-8561, DOI: 10.1021/JF0506535
- ICI@?ER ET AL: "Polyphenoloxidase deactivation kinetics during ohmic heating of grape juice", JOURNAL OF FOOD ENGINEERING, BARKING, ESSEX, GB, vol. 85, no. 3, 26 October 2007 (2007-10-26), pages 410-417, XP022315060, ISSN: 0260-8774, DOI: 10.1016/J.JFOODENG.2007.08.002
- POZO-INSFRAN ET AL: "Inactivation of polyphenol oxidase in muscadine grape juice by dense phase-CO2 processing", FOOD RESEARCH INTERNATIONAL, ELSEVIER APPLIED SCIENCE, BARKING, GB, vol. 40, no. 7, 29 June 2007 (2007-06-29), pages 894-899, XP022134326, ISSN: 0963-9969
- SIEBERT K J: "Effects of portein-polyphenol interactions on beverage haze, stabilisation, and analysis", JOURNAL OF AGRICULTURAL AND FOOD CHEMISTRY, AMERICAN CHEMICAL SOCIETY, BOOKS AND JOURNALS DIVISION, US, vol. 47, no. 2, 1 February 1999 (1999-02-01), pages 353-362, XP002454457, ISSN: 0021-8561, DOI: 10.1021/JF980703O

## Description

The present invention relates to a process preparation of a beverage which is stable for a prolonged period of time.

### Background

Haze is a well-known phenomenon in the beverage industry. Haze can be present in beer, wine and fruit juice. Haze formation can occur at different stages during a brewing process. In "Enzymes in food processing" edited by T. Nagodawithana and G. Reed, 3rd edition, Academic press Inc., San Diego, Chapter V, p.448-449, it has been proposed that haze in beer is the result of interactions between beer proteins and polyphenolic procyanidins. It is explained that in beer haze is often formed upon chilling of the beer. Beer is fermented, maturated, cold stabilised and finally packaged often under chilled conditions. To achieve clarity, beer is often filtered while cold. In spite of the filtration, beer can often become cloudy after it is packaged and distributed to customers and chilled again before serving. Eventually haze can be even formed in beer when it is not or no longer chilled and sediment may develop. Haze formation is undesirable because the cloudiness caused by haze formation resembles cloudiness produced by microbial spoilage, which is undesirable, especially for bright beers.

WO2002/046381 discloses a process for the reduction of haze in a beverage by adding a proline-specific endoprotease to the beverage. WO2002/046381 further discloses that by reducing haze with proline-specific endoprotease, a high content of anti-oxidants, such as polyphenols are still present in the beverage. These antioxidant polyphenols are considered valuable as a health improving ingredient.

WO2003/104382 discloses that in addition to adding proline-specific endoprotease to reduce haze in a beverage, the solubility of peptides can be increased by adding an auxiliary exo- and/or endoprotease to the beverage, whereby it is postulated that the interaction between remaining polypeptides with polyphenols is further reduced.

Apart from proteins, also polyphenols are considered to be involved in haze formation. The precipitation of proteins is considered to be stimulated by small quantities of polyphenols (Minussi et al., Trends in Food Science and Technology 2002, Vol. 13, p. 205-216). US 4,411,914 discloses that the colloidal stability of beer can be improved by adding a polyphenoloxidase to oxidize polyphenols and then removing the resulting precipitate.

We found that after adding either proline-specific endoprotease or polyphenoloxidase alone, haze can still be formed in a beverage such as beer after prolonged storage.

The aim of the present invention is to produce a stable beverage.

### Summary of the invention

The present invention relates to a process for the preparation of a beverage, comprising adding a proline-specific protease and a polyphenoloxidase to the beverage, and preparing the beverage.

Advantageously it was found that also after prolonged storage less haze was formed in a beverage, such as beer, that was treated with a proline-specific protease and a polyphenoloxidase as compared to a beverage produced with one of the enzymes alone.

### Detailed description

The present disclosure relates to a process for the preparation of a beverage comprising adding a proline-specific protease and a polyphenoloxidase to the beverage, and preparing the beverage.

As used herein, the wording "beverage" includes beverages in all stages of its preparation. A beverage is not only a beverage ready for consumption, but may also be any intermediate form of a beverage. An intermediate form of a beverage may not be entirely liquid. For example, wort as used in beer preparation is encompassed by the wording "beverage".

In one embodiment a beverage is a beer. A beer in a process as disclosed herein can be a beer prepared from mashes from unmalted cereals, as well as malted cereals, or from mashes prepared from a mixture of malted and unmalted cereals. Examples of cereals from which beer can be prepared are barley and wheat. In addition, beer can be prepared with adjuncts such as maize, rice or cassava. Beer as used herein can have all possible alcohol contents, for instance between 0 to 12 v/v%, such as between 1 to 10 v/v%, or 2 to 8 v/v%. There is a large variety in processes for preparing beer, which are known to a skilled person in the art. Typically, a process for preparing beer comprises a phase of preparing a mash and separating wort from the mash, a fermentation phase, a maturation phase, and a stabilisation phase. Some processes for preparing beer comprise a phase of filtering the beer. In some processes fermentation is known as primary fermentation. The fermentation phase is the phase in beer brewing intended to ferment available sugars into alcohol by added yeast. The maturation phase is also known as the secondary fermentation and is intended to convert undesirable flavour components such as diketones into better tasting components. The stabilisation is intended to promote formation of polyphenol-protein aggregates and enable precipitation. Optionally, a process for preparing beer comprises a step of filtration, for instance after stabilisation. Usually the beer is packaged after stabilisation and / or filtration for instance in a bottle, can or keg.

Generally, during beer brewing a number of parameters may be checked. The end of the fermentation phase may, for example, be determined by measuring the density of the beer being prepared. The end of the fermentation phase is generally considered as the start of the maturation phase. The end of the maturation phase and thereby the start of the stabilisation phase may be determined by measuring the amount of the di-acetyl content present in the beer. However, in practice the di-acetyl content may vary depending on the type of beer desired.

In another embodiment a beverage in a process as disclosed herein is a wine or fruit juice. Wine is usually prepared from grapes. Fruit juice may be juice obtained from for example red berries, strawberries, apples, pears, tomatoes, citrus fruits, vegetables etc.

A proline-specific protease and a polyphenoloxidase may be added to a beverage during any suitable phase in a preparation of a beverage. The proline-specific protease and polyphenoloxidase do not need to be added at the same time, but can be added at a different phase during the preparation of a beverage. Since polyphenoloxidase requires oxygen for activity, it is essential that oxygen is present in the beverage during at least a certain phase in the preparation of a beverage. In the event the beverage is beer, the proline-specific protease and / or polyphenoloxidase may be added during the fermentation phase in a process for preparing beer. Alternatively the proline-specific protease and / or polyphenoloxidase may be added prior to the fermentation phase in a process for preparing beer. The proline-specific protease and / or polyphenoloxidase may also be added to the beer after the fermentation phase, for example during or after a cold stabilisation phase, in a process for preparing beer.

In one embodiment of the process as disclosed herein the beverage is a fruit juice or wine.

In a process for the preparation of a fruit juice, the proline-specific protease and polyphenoloxidase may be added during maceration or depectinization.

In a process for preparing wine the proline-specific protease and polyphenoloxidase may be added during or after alcoholic fermentation or after malolactic fermentation.

Since haze formation often occurs in acidic beverages such as beer, fruit juice and wine, the proline-specific protease and polyphenoloxidase advantageously have a pH optimum for activity at a pH below pH 7, but this is not essential. For example, the proline specific protease has a pH optimum between 3 and 7. The polyphenoloxidase may have a pH optimum between 4 and 7. The pH optima of proline-specific protease and / or polyphenoloxidase activity are measured according to the procedures outlined in the Materials and Methods section.

In a process for preparing beer, the pH in beer at the start of the fermentation phase may be about 5 to 6 and during the fermentation the pH usually decreases to about pH 4.

The amount of proline-specific protease and polyphenoloxidase that is added to the beverage may vary between wide limits and is, among other factors, dependent on the amount of proteins and polyphenols present in starting material, such as barley, wheat in case of beer, or fruits from which a beverage is made. A suitable amount of proline-specific protease and polyphenoloxidase that is added to a beverage may be between 0.1 mg/ I to 200 mg/l, , such as between 0.5 mg/l and 100 mg/l, such as between 1 and 50 mg/l, 0.05 mg/l to 10 mg/l.

In this description, the words haze, turbidity and cloudiness are used interchangeably. Haze, turbidity or cloudiness can be formed as the result of protein-polyphenol or polyphenol-polyphenol interactions.

A polyphenol is defined as a compound having a chemical structure, which structure contains at least two aromatic rings substituted with at least one hydroxyl group or having a chemical structure which contains at least one aromatic ring substituted with at least two hydroxyl groups. Examples of polyphenols are tannins and flavonoids, for example catechins, flavonols and anthocyanins.

The words peptide or protein are used interchangeably herein. Peptide or proteins are polymers of amino acid monomers.

A proline-specific endoprotease is defined herein as an endoprotease that cuts proteins or peptides at places where the protein or peptide contains a proline- residue in its chain.

The internationally recognized schemes for the classification and nomenclature of all enzymes from International Union of Biochemistry and Molecular Biology (IUBMB) include proteases. The updated IUBMB text for protease EC numbers can be found at the IUBMB website. In this system enzymes are defined by the fact that they catalyse a single reaction. The system categorises the proteases into endo- and exoproteases. Endoproteases are those enzymes that hydrolyse internal peptide bonds exoproteases hydrolyse peptide bonds adjacent to a terminal α-amino group ("aminopeptidases"), or a peptide bond between the terminal carboxyl group and the penultimate amino acid ("carboxypeptidases"). The endoproteases are divided into sub-subclasses on the basis of catalytic mechanism. There are sub-subclasses of serine endoproteases (EC 3.4.21), cysteine endoproteases (EC 3.4.22), aspartic endoproteases (EC 3.4.23), metalloendoproteases (EC 3.4.24) and threonine endoproteases (EC 3.4.25). WO2002/046381 discloses a proline-specific endoprotease obtainable from *Aspergillus niger.* Proline specific endoprotease belongs to the subclass of serine endoproteases (EC 3.4.21). A proline-specific endoprotease in a process of the present invention belongs to enzyme classification EC 3.4.21.26.

A suitable proline-specific protease in a process of the present invention may be a proline-specific endoprotease or a proline-specific oligopeptidase, preferably a proline-specific endoprotease. Suitable proline-specific endoprotease or a proline specific oligopeptidase may be derived from any suitable microorganism, for instance *Flavobacterium meningosepticum, Sphingomonas capsulata, Penicillium sp.,* for instance *Penicillium chrysogenum* or *Aspergillus sp.* for instance *A. niger.*

A polyphenoloxidase in a process of the invention belongs to E.C. enzyme classification E.C 1.10.3.1 (catechol oxidase), EC 1.10.3.2 (laccase) or E.C. 1.14.18.1 (monophenol mono-oxidase). Polyphenol oxidase is a group of enzymes oxidizing mono-or di-phenols or derivatives thereof. Polyphenol oxidases are widespread in nature and occurring in plants, bacteria and fungi. Polyphenol oxidase in a process as disclosed herein may be derivable from *Trametes sp.* such as *Trametes versicolor, and Trametes villosa, Agaricus bisporus, Streptomyces coelicolor, Pleurotus sp.* such as *P. ostreatus, Pycnoporus, Polyporus, Myceliophthora thermophilia*" *Aspergillus sp, Neurospora,* and *Bacillus sp.*

The enzymes proline-specific protease and polyphenoloxidase as disclosed herein can be produced by fermentation process according by known methods in the art. To maximize production, the enzymes can be expressed in a suitable host organism such as a *Bacillus, Pichia* or *Aspergillus* sp., such as *Bacillus subtilis, Pichia pastoris, Penicillium chrysogenum, Aspergillus niger* or *Aspergillus oryzae.* The enzyme can be recovered from culture broth by well-known methods, such as ammonium sulphate or ethanol precipitation, acid extraction, or anion or cation exchange chromatography. High performance liquid chromatography (HPLC) may be employed for purification.

Herewith described is a beverage obtainable by a process as disclosed herein. It was advantageously found that the beverage was stable, i.e. during storage less haze was formed compared to a beverage which was prepared with either proline-specific protease or polyphenoloxidase alone.

### Description of the figures

**Figure 1****.** Haze in beer at 20 °C measured at H25 scatter angle after storage up to 6 months. Beer was prepared in the presence of proline-specific endoprotease (Brewers Clarex™), polyphenoloxidase (Laccase M120), Brewers Clarex and Laccase M120 or no enzymes added (Reference).
**Figure 2****.** Haze in beer at 20 °C measured at H90 scatter angle after storage up to 6 months. Beer was prepared in the presence of proline-specific endoprotease (Brewers Clarex™), polyphenoloxidase (Laccase M120), Brewers Clarex and Laccase M120 or no enzymes added (Reference).
**Figure 3****.** Haze in beer at 0 °C measured at H25 scatter angle after storage up to 6 months. Beer was prepared in the presence of proline-specific endoprotease (Brewers Clarex™), polyphenoloxidase (Laccase M120), Brewers Clarex and Laccase M120 or no enzymes added (Reference).
**Figure 4****.** Haze in beer at 0 °C measured at H90 scatter angle after storage up to 6 months. Beer was prepared in the presence of proline-specific endoprotease (Brewers Clarex™), polyphenoloxidase (Laccase M120), Brewers Clarex and Laccase M120 or no enzymes added (Reference).

### EXAMPLES

### Materials & Methods

### Proline specific endoprotease from A. niger

A commercial sample of proline-specific endoprotease from *A.niger,* Brewers Clarex™ (5 PPU / g product) was used. The activity of proline-specific endoprotease was measured on the synthetic peptide Z-Gly-Pro-pNA at 37°C in a citrate/disodium phosphate buffer pH 4.6
The reaction products were monitored spectrophotometrically at 405 nM. One unit (1PPU) is defined as the quantity of enzyme that liberates 1 µmol of p-nitroanilide per minute under these test conditions.

### Polyphenoloxidase

Laccase M120 (not less than 108,000 POU / g product) is a polyphenoloxidase obtained from Amano Enzyme (Chipping Norton, UK).

Laccase activity was measured according to the instruction from Amano (E211: The assay method for laccase activity = P-4AA method) by monitoring the increase of quinone-imine dye absorbance at 505 nm under the assay conditions. 4-amino-antipyrine + phenol + O₂ → quinone-imine dye + H₂O.
One laccase unit (POU) is defined as the amount of the enzyme contained in 1 ml of the reaction mixture, the absorbance of which increases at the rate of 0.1 per minute under the assay conditions.

### Turbidity measurements

The turbidity or haze was measured with a Haffman's VOS Rota 90/25 dual angle turbidity meter or an equivalent apparatus. The two angles, 90 and 25 degrees, are indicated as H90 and H25.

Instrument calibration was performed according to Analytica EBC method 9.29 using AEPA-1 standards. The result of the haze measurement was expressed in EBC units.

### Example 1: Haze formation in beer treated with proline-specific endoprotease, polyphenol oxidase and the combination of these two enzymes.

Beer is produced at pilot plant scale. In all experiments the mashing protocol is exactly the same. At the start of fermentation enzymes are added. As a reference Brewers Clarex™ and polyphenol oxidase alone are used. Furthermore combinations of Brewers Clarex™ and polyphenol oxidase are tested. All experiments are done at a standard oxygen concentration in the wort of 12 ppm as well as at a double oxygen concentration of 24 ppm. The fermentation is followed by a cold maturation/stabilisation and subsequent filtration. The beer is then bottled without using PVPP or silica and stored at 20 degrees Celsius.

Beer haze is measured at 20 °C and 0 °C and after forcing for 6 days at 60 °C and subsequent cooling overnight at 0 °C.

Real time shelf life is measured after storage at 20 °C and 24 hours chilling at 0 °C for several months.

Turbidity of the beer is measured as indicated above.

After forcing, the beer made with a combination of proline-specific endoprotease (Brewers Clarex) and polyphenol oxidase has a lower turbidity compared to the beers made with either proline-specific endoprotease or polyphenol oxidase alone.

### Example 2: Haze formation in beer treated with proline-specific endoprotease, polyphenol oxidase and the combination of these two enzymes.

According to a standard brewing procedure beer was produced on pilot plant scale. 100% WeyermannR Pilsner Malt harvest 2013 was used. This malt is representative for a good quality malt. After milling the malt was transferred into a mash conversion vessel. The malt is extracted using a standard mashing scheme as show below:
62 °C 5min,
66 °C 30 min,
72 °C 20 min,
mash off at 78 °C for 5 min.

After the mash off, the mash was subsequently filtered over a Lautertun and the resulting wort was boiled. HopsteinerR Polaris Pellets type 90 were used calculated to 30 BU. After boiling the wort was cooled. The pitching wort was 12 °P. The oxygen level was brought to 12 ppm which is a normal level for a 12 °P wort. Fermentation was started by adding a standard brewing yeast. Fermentation was continued at 12 °C until the apparent extract was ≤ 3.5%. Then the temperature was increased to room temperature for a diacetyl rest for 2 - 3 days until the diacetyl level was < 0.1 mg/l. The subsequent maturation phase was one week at 0 °C. After that the beer was filtered, carbonated, bottled and pasteurized.

The following trials were performed:
1. Reference without added enzymes
2. Brewers Clarex at 3 g/HI
3. Laccase M120 at 0.3 g/HI
4. Brewers Clarex at 3 g/HI plus Laccase M120 at 0.3 g/HI

The enzymes were added to the pitching wort after oxygenation.

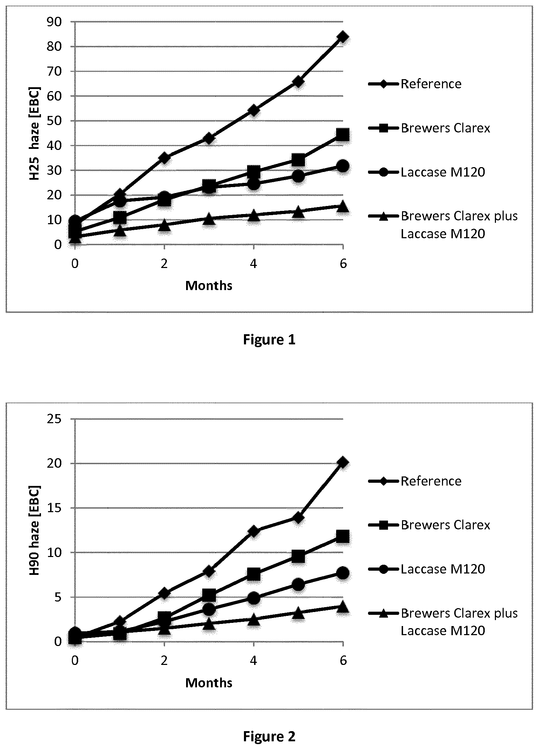

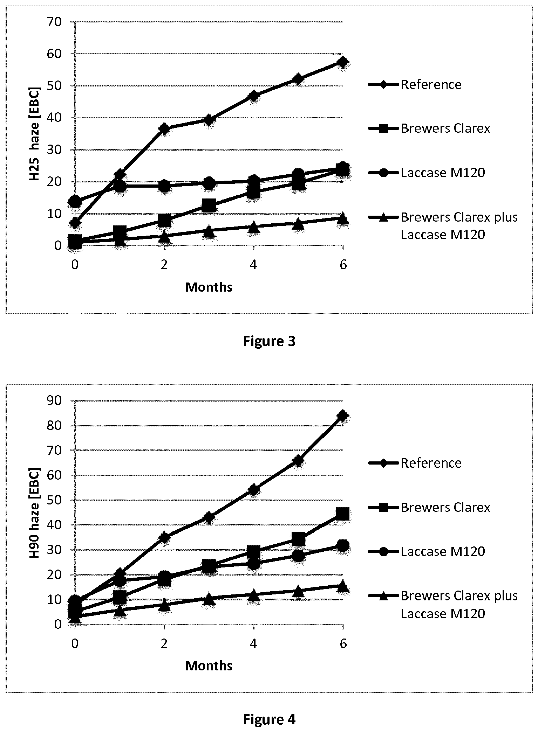

Bottles were stored at 20 °C and each month the haze in the beer was measured at 20 °C and at 0 °C. For measurement at 0°C, the bottles were first stored at 0 °C for 24 h. All haze measurements were performed using the Haffman's VOS Rota 90/25 dual angle turbidity meter as described above. The results, as presented in Figures 1 to 4, show that the beer produced with Brewers Clarex and Laccase M120 had a lower haze value over a prolonged period time compared to the haze value of beers produced with Brewers Clarex or Laccase alone.

### Example 3: Polyphenols in beer treated with proline-specific endoprotease, polyphenol oxidase and the combination of these two enzymes.

Beer is produced at pilot plant scale. In all experiments the mashing protocol is exactly the same. At the start of fermentation combinations of proline-specific endopotease and polyphenol oxidase enzymes are added. As a reference proline-specific endopotease or polyphenol oxidase alone are added to the fermentation. All experiments are done at a standard oxygen concentration in wort of 12 ppm as well as at a double oxygen concentration of 24 ppm. The fermentation is followed by a cold maturation and subsequent filtration.

The beers are analyzed for polyphenols.

The beer made with the combination of Brewers Clarex and polyphenol oxidase show lower polyphenol content in the final beer.

## Claims

1. Process for the preparation of a beverage comprising adding a proline-specific protease and a polyphenoloxidase to the beverage, and preparing the beverage.

2. Process according to claim 1, wherein the beverage is a beer

3. Process according to claim 1, wherein the beverage is a wine or fruit juice.

4. Process according to claim 2, wherein the proline-specific protease and / or polyphenoloxidase is added prior to, during or after a fermentation phase.

5. Process according to claim 4, wherein the polyphenoloxidase is added prior to the fermentation phase.

6. Process according to any one of the claims 1 to 5, wherein the proline-specific protease is derivable from an *Aspergillus* sp. preferably *A. niger.*

## Patentansprüche

1. Verfahren zur Herstellung eines Getränks, bei dem man das Getränk mit einer prolinspezifischen Protease und einer Polyphenoloxidase versetzt und das Getränk zubereitet.

2. Verfahren nach Anspruch 1, wobei es sich bei dem Getränk um ein Bier handelt.

3. Verfahren nach Anspruch 1, wobei es sich bei dem Getränk um einen Wein oder Fruchtsaft handelt.

4. Verfahren nach Anspruch 2, wobei man die prolinspezifische Protease und/oder Polyphenoloxidase vor, während oder nach einer Fermentationsphase zusetzt.

5. Verfahren nach Anspruch 4, wobei man die Polyphenoloxidase vor der Fermentationsphase zusetzt.

6. Verfahren nach einem der Ansprüche 1 bis 5, wobei die prolinspezifische Protease aus einer *Aspergillus* sp., vorzugsweise *A. niger,* gewonnen werden kann.

## Revendications

1. Procédé de préparation d'une boisson, comprenant l'addition d'une protéase proline-spécifique et d'une polyphénol oxydase à la boisson, et la préparation de la boisson.

2. Procédé selon la revendication 1, dans lequel la boisson est une bière.

3. Procédé selon la revendication 1, dans lequel la boisson est un vin ou un jus de fruit.

4. Procédé selon la revendication 2, dans lequel la protéase proline-spécifique et/ou la polyphénol oxydase est ajoutée avant, pendant ou après une phase de fermentation.

5. Procédé selon la revendication 4, dans lequel la polyphénol oxydase est ajoutée avant la phase de fermentation.

6. Procédé selon l'une quelconque des revendications 1 à 5, dans lequel la protéase proline-spécifique peut être dérivée d'*Aspergillus* sp., préférablement d'*A. niger.*
